# EUROPÄISCHE PATENTSCHRIFT

(11) **EP 2 368 845 B1**
(45) Veröffentlichungstag und Bekanntmachung des Hinweises auf die Patenterteilung: **12.12.2012**
(21) Anmeldenummer: 10155042.4
(22) Anmeldetag: 01.03.2010
(51) Int. Cl.: C01B 31/22

(54) **Vorrichtung und Verfahren zum Erzeugen von Kohlendioxid-Schnee**
Device and method for creating carbon dioxide snow
Dispositif et procédé de production de neige carbonique

(43) Veröffentlichungstag der Anmeldung: 28.09.2011
(73) Patentinhaber: Messer France S.A.S., 92816 Puteaux Cedex (FR)
(72) Erfinder: Frère, Émilien, 77100 Meaux (FR)
(74) Vertreter: Münzel, Joachim R.

(56) Entgegenhaltungen:
- US-A- 5 765 394
- US-A- 5 804 826
- DATABASE WPI Week 199433 Thomson Scientific, London, GB; AN 1994-269249 XP002599106 & JP 6 199511 A (NIPPON TANSAN KK) 19. Juli 1994 (1994-07-19)
- DATABASE WPI Week 200865 Thomson Scientific, London, GB; AN 2008-L05411 XP002599107 & JP 2008 184345 A (IWATANI IND CO LTD) 14. August 2008 (2008-08-14)

## Beschreibung

Die Erfindung betrifft eine Vorrichtung zum Erzeugen von Kohlendioxidschnee, mit einer Zuleitung zum Zuführen eines zumindest teilweise aus flüssigem Kohlendioxid bestehenden Mediumsstroms und einer Entspannungsdüse zum Entspannen des Mediumsstroms unter Bildung von Kohlendioxidschnee. Die Erfindung betrifft ferner ein entsprechendes Verfahren.

Derartige Vorrichtungen sind bekannt und werden vielfach eingesetzt, beispielsweise in Apparaturen zum Reinigen von Oberflächen mit Schneestrahlen oder zur Erzeugung von Kohlendioxidschnee zu Kühlzwecken.

Bei der Entspannung von flüssigem Kohlendioxid auf einen Druck von unter 5,18 · 10⁵ Pa (5,18 bar) geht dieses in ein Gemisch von gasförmigem Kohlendioxid und Kohlendioxidschnee über. Der Anteil des dabei erzeugten Kohlendioxidschnees lässt sich theoretisch aus den dem Druck und der Temperatur des flüssigen Kohlendioxids vor der Entspannung exakt bestimmen. In der Praxis jedoch geht ein Teil des zur Entspannung vorgesehenen flüssigen Kohlendioxids aus unterschiedlichsten Gründen noch vor der Entspannung an der Entspannungsdüse in die Gasform über. Somit steht nur ein schwer bestimmbarer Teil des in der Zuleitung herangeführten Kohlendioxids tatsächlich für die Erzeugung von Kohlendioxidschnee zur Verfügung, wodurch entsprechend die Angabe der Menge an tatsächlich erzeugtem Kohlendioxidschnee mit großen Unsicherheiten behaftet ist. Hinzu kommt, dass es in vielen Fällen nicht oder nur mit einem hohen Aufwand möglich ist, den Kohlendioxidschnee nach seiner Herstellung abzuwiegen. So beschreibt beispielsweise die EP 0 823 600 B1 einen Kühlbehälter, der mit einem fest installierten Kühlmodul zum Befüllen mit Kohlendioxidschnee ausgerüstet ist. Wird nun Kohleindioxidschnee durch Entspannen von flüssigem Kohlendioxid in das Kühlmodul eingefüllt, ist die Masse des zugeführten Kohlendioxidschnees im Vergleich zur Masse des gesamten Kühlbehälters so gering, dass eine einigermaßen exakte Mengenbestimmung durch Wägung nur mit unverhältnismäßig großem Aufwand möglich ist.

Die US 5765394 A beschreibt einen Prozess zur Kühlung eines Gutes mit Kohlendioxidschnee, in dem die dielektrischen Eigenschaften von Kohlendioxid genutzt werden, um die Wärmeübertragung auf das zu kühlende Gut zu optimieren.

Die JP 2008184345 A beschriebt ein Verfahren zum Erzeugen von Kohlendioxidschnee an einer Entspannungsdüse, in denen der spezifische Widerstand des Düsenmaterials eine durch die Bildung des Kohlendioxidschnees verursachte statische Aufladung der Düse und damit das Anhaften von Schneepartikeln verhindert.

In der JP 6199511 A wird ebenfalls ein Verfahren zum Erzeugen von Kohlendioxidschnee an einer Entspannungsdüse beschrieben. Bei diesem Gegenstand soll eine spezielle Düsengeometrie die elektrische Aufladung des erzeugten Kohlendioxidschnees verhindern.

Es wäre daher wünschenswert, bereits vor der Entspannung eine Information über die Zusammensetzung und den Aggregatszustand des durch die Zuleitung zur Entspannungsdüse geführten Mediums zu gewinnen.

Aus der US 5 804 826 A ist eine Vorrichtung bekannt, die in Verbindung mit Kohlendioxid-Strahlapparaturen auf optischem Wege detektiert, ob der Sprühdüse flüssiges oder gasförmiges Kohlendioxid zugeführt wird. Dabei wird ein Lichtstrahl durch einen transparenten Abschnitt einer der Sprühdüse vorgeschalteten Zuleitung hindurch auf einen Detektor gesendet und die unterschiedlichen Reflexions- bzw. Transmissionseigenschaften von flüssigem bzw. gasförmigem Kohlendioxid dazu genutzt, eine Information über die Art des durch die Zuleitung strömenden Mediums zu gewinnen. Diese Vorrichtung erlaubt jedoch nur die Prüfung, ob sich überhaupt flüssiges Kohlendioxid in der Zuleitung befindet; eine Quantifizierung oder eine Bestimmung des Anteils des flüssigen Kohlendioxids an der Gesamtmenge des Mediums ist bei diesem Gegenstand weder möglich noch bezweckt. Problematisch bei dieser Vorrichtung ist zudem, dass die vom Detektor erfassten Informationen auch von weiteren Parametern beeinflusst werden, wie beispielsweise der optischen Eigenschaften der Atmosphäre im Strahlengang oder einer auf der Außenoberfläche der Zuleitung sich etwaig bildenden Beschichtung.

Aufgabe der Erfindung ist daher, bei einer Vorrichtung bzw. einem Verfahren zum Erzeugen von Kohlendioxidschnee eine Möglichkeit anzugeben, die Menge des insgesamt erzeugten Kohlendioxidschnees möglichst genau und sicher erfassen zu können.

Gelöst ist diese Aufgabe durch eine Vorrichtung mit den Merkmalen des Patentanspruchs 1.

Die Erfindung ist also dadurch gekennzeichnet, dass bei einer Vorrichtung zum Erzeugen von Kohlendioxidschnee, bei dem flüssiges Kohlendioxid über eine Zuleitung herangeführt und an einer Entspannungsdüse entspannt wird, an der Zuleitung ein Detektor zum Messen der Dielektrizitätskonstante des durch die Zuleitung strömenden Mediumsstroms vorgesehen ist, der mit einer Rechnereinheit zur Berechnung des Anteils an flüssigem Kohlendioxid im Mediumsstrom in Datenaustausch steht. Da die Dielektrizitätskonstanten von flüssigem und gasförmigem Kohlendioxid jeweils unterschiedlich sind, kann in der Rechnereinheit aus der gemessenen Dielektrizitätskonstante zuverlässig der Anteil von flüssigem bzw. gasförmigem Kohlendioxid bestimmt werden. Im Unterschied zu einem optischen Detektor ist die Messung der dielektrischen Funktion weniger anfällig gegenüber Störeinflüssen durch Luftfeuchtigkeit oder durch sich an den Wänden der Zuleitung anhaftenden Partikeln.

Der Detektor umfasst beispielsweise einen in einem Wechselstromkreis angeordneten Kondensator, mittels dessen laufend oder in vorbestimmten Zeitintervallen der kapazitive Widerstand des durch die Zuleitung strömenden Mediumsstroms gemessen wird. Der kapazitive Widerstand ist abhängig von der Dielektrizitätskonstante des jeweils durch die Zuleitung fließenden, aus flüssigem und gasförmigem Kohlendioxid bestehenden Mediumsstroms. Die Messdaten werden einer Rechnereinheit zugeleitet, mittels der aus den Messergebnissen des Detektors der Anteil des flüssigen Kohlendioxids im Mediumsstrom bestimmt wird. Hieraus wird dann, in Kenntnis von Druck und Temperatur in der Zuleitung, die entweder fest vorgegeben sind oder ihrerseits mit geeigneten Detektoren gemessen werden, die Menge an erzeugtem festem Kohlendioxid berechnet. Eine zeitliche Änderung der Dielektrizitätskonstante weist zudem auf eine Änderung in der Zusammensetzung des Mediumsstroms hin und erlaubt gegebenenfalls Rückschlüsse auf mögliche Ursachen hierfür; diese Informationen können wiederum in einem Regelkreis genutzt werden. Beispielsweise könnte eine plötzliche Erhöhung des gasförmigen Anteils auf einen Druckanfall in dem der Zuleitung vorgeschalteten Kohlendioxidtank hinweisen, woraufhin der Druck im Tank über einen geeigneten Regelmechanismus erhöht wird.

Die Rechnereinheit steht dabei bevorzugt mit einem in der Zuleitung angeordneten Sperrventil in Wirkverbindung. Das Sperrventil öffnet bzw. schließt die Zuführung von flüssigem Kohlendioxid an das Entspannungsventil. In Abhängigkeit von den erfassten Parametern von Temperatur, Druck und Menge an flüssigem Kohlendioxid kann so die Erzeugung vorgegebener Mengen von Kohlendioxidschnee genau gesteuert werden.

Die Aufgabe der Erfindung wird auch durch ein Verfahren zum Erzeugen von Kohlendioxidschnee gelöst, bei dem ein zumindest teilweise aus flüssigem Kohlendioxid bestehendes Medium über eine Zuleitung einer Entspannungsdüse zugeführt wird, und das dadurch gekennzeichnet ist, dass von einem Detektor laufend oder in Zeitabständen die Dielektrizitätskonstante des durch die Zuleitung geführten Mediumsstroms im Bereich vor der Entspannungsdüse direkt oder indirekt erfasst wird und aus dem Wert für die Dielektrizitätskonstante in einer Rechnereinheit eine Information über den Anteil von flüssigem Kohlendioxid in dem durch die Zuleitung strömenden Mediumsstrom gewonnen wird. Die Erfassung der Dielektrizitätskonstante erfolgt beispielsweise über eine Messung der Impedanz in einem die Zuleitung als Widerstand einschließenden Wechselstromwiderstand.

Eine vorteilhafte Weiterbildung der Erfindung sieht vor, dass in der Rechnereinheit aus der Information über den Anteil von flüssigem Kohlendioxid und einer gemessenen und/oder vorgegebenen Information über die Gesamtmenge des durch die Zuleitung strömenden Mediums die Gesamtmenge des flüssigen Kohlendioxids gewonnen wird.

In einer abermals vorteilhaften Weiterbildung der Erfindung wird aus der Information über die Gesamtmenge des flüssigen Kohlendioxids, zusammen mit gemessenen und/oder vorgegebenen Werten von Druck und/oder Temperatur des Mediums in der Zuleitung eine Information über die Gesamtmenge an erzeugtem oder zu erzeugendem festem Kohlendioxid gewonnen. Diese Information kann insbesondere dazu verwendet werden, über ein in der Zuleitung zum Entspannungsventil angeordnetes Sperrventil die Zufuhr von flüssigem Kohlendioxid bei Erreichen einer vorgegebenen Menge an erzeugtem Kohlendioxidschnee zu sperren.

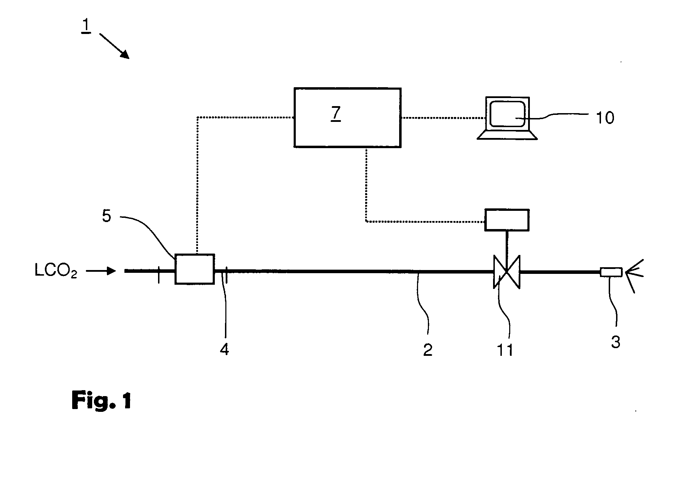

Anhand der Zeichnung soll ein Ausführungsbeispiel der Erfindung näher erläutert werden. Die einzige Zeichnung (Fig. 1) zeigt schematisch eine erfindungsgemäße Vorrichtung in einem Schaltbild.

Die Vorrichtung 1 umfasst eine Zuleitung 2, die an einer hier nicht gezeigten Quelle für flüssiges Kohlendioxid, beispielsweise einem Drucktank, angeschlossen ist. Die Zuleitung 2, in der das flüssige Kohlendioxid unter Druck herangeführt wird, mündet an einer Entspannungsdüse 3 aus, an der das Kohlendioxid auf Umgebungsdruck entspannt wird. Bei der Entspannung flüssigen Kohlendioxids entsteht neben Kohlendioxidgas Kohlendioxidschnee, der anschließend einer weiteren Verarbeitung zugeführt wird und beispielsweise als Kühlmittel oder als Strahlmittel zu Reinigungszwecken zum Einsatz kommt. Insbesondere kann sich an die Entspannungsdüse 3 auch ein -hier ebenfalls nicht gezeigter- geschlossener und thermisch isolierter Behälter zum Sammeln des erzeugten Kohlendioxidschnees anschließen.

Im Betriebzustand wird flüssiges Kohlendioxid aus der Kohlendioxidquelle kontinuierlich durch die Zuleitung 2 unter einem Druck von mehr als 5,18 · 10⁵ Pa (5,18 bar) herangeführt. Während der überwiegende Teil davon an der Entspannungsdüse 3 entspannt und dabei in ein Gemisch aus Kohlendioxidschnee und Kohlendioxidgas übergeht, verdampft ein kleinerer Teil des flüssigen Kohlendioxids bereits in der Zuleitung 2. Das in der Zuleitung 2 fließende Medium besteht somit zwar überwiegend aus flüssigem Kohlendioxid, enthält jedoch zugleich auch nicht unerhebliche Bestandteile an gasförmigem Kohlendioxid.

In der Zuleitung 2 ist ein Messabschnitt 4 vorgesehen, in dem ein Detektor 5 zur dynamischen Erfassung der Dielektrizitätskonstanten des in der Zuleitung 2 fließenden Mediums angeordnet ist. Der Detektor 5 umfasst beispielsweise einen Wechselstromkreis, in den ein am Messabschnitt 4 der Zuleitung 2 angeordneter Kondensator integriert ist. Der vom Detektor 5 am Messabschnitt 4 ermittelte kapazitive Widerstand hängt insbesondere von der Dielektrizitätskonstante des durch die Zuleitung 2 fließenden Mediums ab. Die Dielektrizitätskonstante des durch die Zuleitung 2 geführten Mediums hängt somit von dem Verhältnis aus flüssigem zu gasförmigem Kohlendioxid in der Zuleitung 2 ab. Die vom Detektor 5 ermittelten Messwerte werden einer Rechnereinheit 7 zugeleitet, in der aus den gemessenen Daten eine Information über den Anteil an in der Zuleitung 2 strömendem flüssigem Kohlendioxid ermittelt wird. Diese Information kann dabei beispielsweise eine Information über die aktuelle Höhe oder über die zeitliche Veränderung des Anteils an flüssigem Kohlendioxid in der Zuleitung 2 sein.

Werden zugleich die Werte von Temperatur und Druck in der Zuleitung 2 sowie die Gesamtmenge des durch die Zuleitung 2 strömendem Mediums erfasst, errechnet die Rechnereinheit 7 hieraus eine Information über die Menge des an der Entspannungsdüse 3 erzeugten Kohlendioxidschnee. Diese Information kann in einer Anzeige- und Eingabeeinheit 10 visualisiert werden. Weiterhin steht die Rechnereinheit 7 mit einem stromauf zum Entspannungsventil 3 in der Zuleitung 2 angeordneten Stellventil 11 in Datenverbindung. Bei Erreichen eines vorgegebenen oder über die Eingabeeinheit 10 einprogrammierten Wertes der Menge an erzeugtem Kohlendioxidschnee ergeht ein entsprechender Steuerbefehl von der Rechnereinheit 7 an das Stellventil 11 und die Zufuhr von Medium durch die Zuleitung 2 wird gesperrt.

Die erfindungsgemäße Vorrichtung eignet sich insbesondere zum Befüllen von Aufnahmefächern, wie sie beispielsweise als Kühlmodul für einen Kühlbehälter der in der EP 1088191 B1 beschriebenen Art, oder ein Behältnis zum Aufnehmen von Kohlendioxidschnee, wie es in der EP 1090259 B1 beschrieben ist, mit einer vorgegebenen Menge an Kohlendioxidschnee. Die erfindungsgemäße Vorrichtung ermöglicht dabei eine genaue Dosierung des Kohlendioxidschnees bereits bei seiner Erzeugung und ermöglicht damit einen besonders wirtschaftlichen Einsatz des Kohlendioxids. Sie kann auch in so genannten Trockeneis - Pelletierern zum Einsatz kommen, in denen feste Trockeneiskörner (Pellets) aus Verpressen und Extrudieren von Kohlendioxidschnee gewonnen werden. In diesen Apparaten ermöglicht der Einsatz der erfindungsgemäßen Vorrichtung bzw. des erfindungsgemäße Verfahrens eine präzise Bestimmung der Ausgangsmenge an Trockeneis und verhindert somit eine fehlerhafte Befüllung der Druckkammer, in der die Verpressung des Kohlendioxidschnees stattfindet.

### Bezugszeichenliste

- 1.: Vorrichtung
- 2.: Zuleitung
- 3.: Entspannungsdüse
- 4.: -
- 5.: Detektor
- 6.: -
- 7.: Rechnereinheit
- 8.: -
- 9.: -
- 10.: Anzeige- und Eingabeeinheit
- 11.: Stellventil

## Patentansprüche

1. Vorrichtung zum Erzeugen von Kohlendioxidschnee, mit einer Zuleitung (2) zum Zuführen eines zumindest teilweise aus flüssigem Kohlendioxid bestehenden Mediumsstroms und einer Entspannungsdüse (3) zum Entspannen des Mediumsstroms unter Bildung von Kohlendioxidschnee,
**dadurch gekennzeichnet,**
**dass** an der Zuleitung (2) ein Detektor (5) zum Messen der Dielektrizitätskonstanten des durch die Zuleitung strömenden Mediumsstroms vorgesehen ist, die mit einer Rechnereinheit (7) zur Berechnung des Anteils an flüssigem Kohlendioxid im Mediumsstrom in Datenaustausch steht.

2. Vorrichtung nach Anspruch 1, **dadurch gekennzeichnet, dass** die Rechnereinheit (7) mit einem in der Zuleitung (2) angeordneten Sperrventil (11) in Wirkverbindung steht.

3. Verfahren zum Erzeugen von Kohlendioxidschnee, bei dem ein zumindest teilweise aus flüssigem Kohlendioxid bestehendes Medium in einer Zuleitung einer Entspannungsdüse (3) zugeführt wird,
**dadurch gekennzeichnet,**
**dass** von einem Detektor (5) laufend oder in Zeitabständen die Dielektrizitätskonstante des durch die Zuleitung geführten Mediumsstroms im Bereich vor der Entspannungsdüse (3) direkt oder indirekt erfasst wird und aus dem Wert für die Dielektrizitätskonstante in einer Rechnereinheit (7) eine Information über den Anteil von flüssigem Kohlendioxid in dem durch die Zuleitung (2) strömenden Mediumsstrom gewonnen wird.

4. Verfahren nach Anspruch 3, **dadurch gekennzeichnet, dass** in der Rechnereinheit (7) aus der Information über den Anteil von flüssigem Kohlendioxid und einer gemessenen und/oder vorgegebenen Information über die Gesamtmenge des durch die Zuleitung strömenden Mediums die Gesamtmenge des insgesamt zur Entspannungsdüse geleiteten flüssigen Kohlendioxids gewonnen wird.

5. Verfahren nach Anspruch 4, **dadurch gekennzeichnet, dass** aus der Information über die Gesamtmenge des flüssigen Kohlendioxids zusammen mit gemessenen und/oder vorgegebenen Werten von Druck und/oder Temperatur des Mediums in der Zuleitung eine Information über die Gesamtmenge an erzeugtem oder zu erzeugendem festem Kohlendioxid gewonnen wird.

6. Verwendung einer Vorrichtung nach Anspruch 1 oder 2 oder eines Verfahrens nach Anspruch 3 bis 5 zum Befüllen eines Kühlmoduls eines Kühlcontainers mit Kohlendioxidschnee oder zum Beladen einer Vorrichtung zum Herstellen von Trockeneispellets aus Trockeneisschnee.

## Claims

1. Device for creating carbon dioxide snow, comprising a feed line (2), for feeding a stream of medium at least partially consisting of liquid carbon dioxide, and an expansion nozzle (3), for allowing the stream of medium to relax while forming carbon dioxide snow, **characterized in that** a detector (5) for measuring the dielectric constants of the stream of medium flowing through the feed line is provided on the feed line (2) and is in data exchange with a computer unit (7) for calculating the proportion of liquid carbon dioxide in the stream of medium.

2. Device according to Claim 1, **characterized in that** the computer unit (7) is in operative connection with a shut-off valve (11) arranged in the feed line (2).

3. Method for creating carbon dioxide snow in which a medium at least partially consisting of liquid carbon dioxide is fed in a feed line to an expansion nozzle (3), **characterized in that** the dielectric constant of the stream of medium passed through the feed line is directly or indirectly detected in the region upstream of the expansion nozzle (3) continuously or at time intervals by a detector (5) and information concerning the proportion of liquid carbon dioxide in the stream of medium flowing through the feed line (2) is obtained in a computer unit (7) from the value for the dielectric constant.

4. Method according to Claim 3, **characterized in that** the total amount of the liquid carbon dioxide passed overall to the expansion nozzle is obtained in the computer unit (7) from the information concerning the proportion of liquid carbon dioxide and measured and/or predetermined information concerning the total amount of the medium flowing through the feed line.

5. Method according to Claim 4, **characterized in that** information concerning the total amount of solid carbon dioxide created or to be created is obtained from the information concerning the total amount of the liquid carbon dioxide together with measured and/or predetermined values of the pressure and/or temperature of the medium in the feed line.

6. Use of a device according to Claim 1 or 2 or of a method according to Claims 3 to 5 for filling a refrigerating module of a refrigerating container with carbon dioxide snow or for charging a device for producing dry ice pellets from dry ice snow.

## Revendications

1. Dispositif de production de neige carbonique, comprenant une conduite d'amenée (2) pour l'apport d'un flux de fluide constitué au moins en partie de dioxyde de carbone liquide et une buse de détente (3) pour détendre le flux de fluide en formant de la neige carbonique,
**caractérisé en ce**
**qu'**un détecteur (5) est prévu au niveau de la conduite d'amenée (2) pour mesurer les constantes diélectriques du flux de fluide s'écoulant à travers la conduite d'amenée et est en liaison d'échange de données avec une unité de calcul (7) pour calculer la proportion de dioxyde de carbone liquide dans le flux de fluide.

2. Dispositif selon la revendication 1, **caractérisé en ce que** l'unité de calcul (7) est en liaison fonctionnelle avec une soupape d'arrêt (11) disposée dans la conduite d'amenée (2).

3. Procédé pour produire de la neige carbonique, dans lequel un fluide constitué au moins en partie de dioxyde de carbone liquide est acheminé dans une conduite d'amenée d'une buse de détente (3),
**caractérisé en ce**
**qu'**un détecteur (5) détecte en continu ou à intervalles de temps, directement ou indirectement, la constante diélectrique du flux de fluide guidé à travers la conduite d'amenée dans la région avant la buse de détente (3), et l'on obtient dans une unité de calcul (7), à partir de la valeur pour la constante diélectrique, une information sur la proportion de dioxyde de carbone dans le flux de fluide s'écoulant à travers la conduite d'amenée (2).

4. Procédé selon la revendication 3, **caractérisé en ce que** dans l'unité de calcul (7), à partir de l'information sur la proportion de dioxyde de carbone liquide et d'une information mesurée et/ou prédéfinie sur la quantité totale de fluide s'écoulant à travers la conduite d'amenée, on obtient la quantité totale de dioxyde de carbone liquide guidé dans l'ensemble jusqu'à la buse de détente.

5. Procédé selon la revendication 4, **caractérisé en ce qu'**à partir de l'information concernant la quantité totale de dioxyde de carbone liquide, conjointement avec les valeurs mesurées et/ou prédéfinies de pression et/ou de température du fluide dans la conduite d'amenée, on obtient une information sur la quantité totale de dioxyde de carbone solide produit ou devant être produit.

6. Utilisation d'un dispositif selon la revendication 1 ou 2, ou d'un procédé selon les revendications 3 à 5, pour remplir un module de refroidissement d'un conteneur réfrigérant avec de la neige carbonique ou pour charger un dispositif pour la fabrication de granulés de glace sèche à partir de neige de glace sèche.
